# EUROPÄISCHE PATENTANMELDUNG

(11) **EP 1 396 656 A1**
(43) Veröffentlichungstag der Anmeldung: **10.03.2004**
(21) Anmeldenummer: 03019216.5
(22) Anmeldetag: 26.08.2003
(51) Int. Cl.: F16F 15/14

(54) **Ungehafteter Drehschwingungsdämpfer mit geringer axialer Ausdehnung und dazugehöriges Fertigungsverfahren**

(30) Priorität: 04.09.2002 DE 10241316
(71) Anmelder: PAGUAG GmbH, 40472 Düsseldorf (DE)
(72) Erfinder: Kricke, Martin, 42781 Haan (DE); Lichtenberg, Wilhelm, 40470 Düsseldorf (DE)
(74) Vertreter: Kierdorf, Theodor, Dipl.-Ing.

(57) **Zusammenfassung**

Es wird eine Drehschwingungsdämpferanordnung beschrieben, die ein rotationssymmetrisches Trägerteil (3), einen koaxialen Trägheitsring (4) und mindestens einen im Spalt zwischen Trägerteil und Trägheitsring angeordneten Elastomerkörper (5) aufweist, wobei der Spalt in der axialen Querschnittsfläche U- bzw. V-förmig ausgebildet ist.

## Beschreibung

Die Erfindung betrifft eine Drehschwingungsdämpferanordnung, insbesondere für den Einsatz bei Kraftfahrzeugen insbesondere an Kurbelwellen und/oder Nockenwellen. Üblicherweise bestehen derartige Bauteilen aus zumindest zwei starren koaxialen Bauteilen, die über einen die Dämpfung bewirkenden Elastomerkörper miteinander verbunden sind.

Bekannt sind aktive Bauelemente, bei denen der Antriebskraftfluss über den Elastomerkörper geht, wie Riemenscheibenräder z.B. zum Antrieb der Lichtmaschine, bei denen das eine starre Teil eine an der Motorwelle befestigte Nabe, gegebenenfalls mit Freilauf, ist und das andere starre Teil eine Riemenscheibe.

Bekannt sind ferner passive Bauelemente, bei denen eine Schwungscheibe oder ein Trägheitsring über einen Elastomerkörper mit einem an der Welle befestigten Trägerteil die Schwingungsdämpfung der Welle bewirkt.

Neben hoher Funktionalität und einfacher und damit kostengünstiger Herstellung wird für derartige Bauelemente zunehmend eine raumsparende Ausführung gefordert.

Übliche Drehschwingungsdämpferanordnungen weisen zwischen Nabenteil und Riemenscheibe bzw. Trägheitsring einen achsenparallelen Ringspalt auf, in den der Elastomerkörper eingeschossen wird, wobei die Verbindung zwischen den Teilen durch Friktionskräfte gewährleistet wird. Zur Vermeidung einer Schiefstellung der Riemenscheibe darf der Elastomerkörper und Spalt allerdings eine Mindestbreite ("Breite der Gummispur") nicht unterschreiten, so dass einer Verkleinerung des Bauteils Grenzen gesetzt sind. Das heißt, dass es nicht ohne weiteres möglich ist, große Durchmesser bei geringer axialer Ausdehnung zu realisieren.

Andere bekannte Drehschwingungsdämpferanordnungen weisen einen zumindest teilweise radialen Spalt auf, in den die vulkanisierbare Elastomermasse eingebracht wird, die an den Spaltbegrenzungsflächen anvulkanisiert. Die Verbindung zwischen den Teilen wird durch die Haftung der Elastomermasse an den Spaltbegrenzungsflächen dargestellt. Eine Vorspannung des Elastomerkörpers ist nicht möglich. Derartige Drehschwingungsdämpferanordnungen können zwar ohne Nachteil für die Baugröße mit größerer Scherspaltfläche hergestellt werden, sie weisen aber eine für viele Anwendungen zu geringe Radialsteifigkeit des Trägheitsringes auf, die sich negativ unter Einwirkung von Zentrifugalkraft auswirken kann. Darüber hinaus erfordern anvulkanisierte Elastomerkörper in Vergleich zu eingeschossenen Elastomerkörpern einen hohen Herstellungsaufwand.

Aufgabe der vorliegenden Erfindung ist es, eine Drehschwingungsdämpferanordnung zur Verfügung zu stellen, die die genannten Nachteile nicht aufweist. Insbesondere ist es Aufgabe der Erfindung, Drehschwingungsdämpferanordnungen mit erhöhter Stabilität gegen Schiefstellung und Radialsteifigkeit des Trägheitsringes bzw. der Riemenscheibe bei raumsparender Bauweise zur Verfügung zu stellen. Eine weitere Aufgabe der Erfindung besteht darin, vorgefertigte Elastomerkörper einzusetzen, die ohne den Aufwand der Anvulkanisierung eingesetzt werden können. Nicht zuletzt ist es Aufgabe der Erfindung, den Einsatz des beim Einschießen des Elastomerkörpers erforderlichen Gleitmittels aus tels aus arbeitshygienischen Gründen zu vermeiden.

Diese und weitere, für den Fachmann ohne weiteres aufgrund der nachfolgenden Beschreibung erkennbare, Aufgaben sind durch eine in der axialen Querschnittsfläche U- bzw. V-förmige Ausbildung des Spaltes zur Aufnahme des Elastomerkörpers lösbar.

Gegenstand der Erfindung ist dem gemäß eine Drehschwingungsdämpferanordnung, die ein rotationssymmetrisches Trägerteil, einen koaxialen Trägheitsring und mindestens einen im Spalt zwischen Trägerteil und Trägheitsring angeordneten Elastomerkörper aufweist, wobei der Spalt in der Ansicht einer die Rotationsachse enthaltenden Querschnittsfläche U- bzw. V-förmig ausgebildet ist. Durch eine solche Konfiguration lässt sich verhältnismäßig einfach ein Drehschwingungsdämpfer mit großem Durchmesser bei geringer axialer Ausdehnung und hinreichender Radialsteifigkeit herstellen.

Vorzugsweise ist die U- bzw. V-Form radial nach außen öffnet, insbesondere wenn der Trägheitsring als sintermetallurgisch hergestellte Riemenscheibe ausgebildet ist. Eine nach innen, d.h. in Richtung auf die Rotationsachse, offene U- bzw. V-Form sollte für passive Drehschwingungsdämpfer ohne Nachteil realisierbar sein.

Weiter bevorzugt bilden die Schenkel (d.h. die Querschnittsmantellinie der konischen Spaltbegrenzungsflächen) im Falle der V-Form mit der eingeschlossenen Radiuslinie jeweils einen Winkel von weniger als 30°, vorzugsweise weniger als 20°, wobei die Schenkel der V-Form bezüglich der eingeschlossenen Radiuslinie vorteilhaft symmetrisch sind. Der Winkel sollte vorzugsweise mindestens 8°, besonders bevorzugt mindestens 15° betragen, um ein radiales Auswandern der Achse des Trägheitsringes gegen das Trägerteil bzw. Nabenteil während des Gebrauchs des Bauteils sicher zu verhindern, d.h. Radialsteifigkeit der Elemente der Drehschwingungsdämpferanordnung zu gewährleisten. Dabei ist es für die Gewährleistung der Radialsteifigkeit ausreichend, dass die Winkel im Bereich des Scheitels bis etwa zur halben Höhe der V-Form eingehalten werden. Danach können die Schenkelspitzen ohne Nachteil parallel verlaufen. Im Interesse einer schmalen Bauform des Drehschwingungsdämpfers kann dies sogar bevorzugt sein.

Vorzugsweise beträgt das Verhältnis von Höhe zu Breite der U-bzw. V-Form bezogen auf die Mittelebene des doppelt konischen Spaltes 1 bis 5, besonders bevorzugt 1,5 bis 4.

Die erfindungsgemäße Drehschwingungsdämpferanordnung entfaltet wegen der hohen Radialsteifigkeit insbesondere bei aktiven Bauteilen, bei denen der Kraftfluss einer Antriebskraftübertragung über den Elastomerkörper erfolgt, besondere Vorteile. Besonders vorteilhaft ist daher der Trägheitsring als Riemenscheibe ausgebildet.

Prinzipiell kann der Teil der Drehschwingungsdämpferanordnung, der die äußere Spaltbegrenzungsfläche bildet, zweiteilig ausgebildet sein. Im Falle einer bezüglich der Rotationsachse nach außen offenen U- bzw. V-förmigen Spaltquerschnittsform kann das Trägerteil bzw. der Nabenring in einer Fläche, die die Scheitellinie der U- bzw. V-förmigen Spaltquerschnittsfläche enthält, geteilt sein, wobei der Trägheitsring mit dem bzw. den vorgefertigten Elastomerkörper(n) zwischen die beiden Teile eingelegt wird und anschließend die beiden Teile unter Erzeugung einer vorwählbaren Vorspannung des Elastomerkörpers z.B. mittels Schrauben oder Nieten zusammengefügt werden.

Erfindungsgemäß bevorzugt ist die einteilige Ausführung des Trägerteils. Dabei wird das Trägerteil aus tiefziehfähigen Stahl derart hergestellt, dass die im axialen Querschnitt U-bzw. V-förmige Spaltbegrenzung derart aufgeweitet ist, dass der größte Radiusabstand zumindest eines Schenkels kleiner ist, als der kleinste Radius des Trägheitsringes, der Trägheitsring und der bzw. die Elastomerkörper über den Schenkel geschoben bzw. geschossen werden und der bzw. die Schenkel anschließend durch Kaltverformung in die gewünschte Form gebracht werden.

Bevorzugt wird dabei die Vorform des einteiligen Trägerteils aus einer gegebenenfalls durch Tiefziehen vorgeformten Scheibe durch radiales Spalten zur Erzeugung der aufgeweiteten, im Querschnitt U- bzw. V-förmigen Spaltbegrenzung hergestellt.

Die Erfindung erlaubt die Herstellung von Drehschwingungsdämpfern ohne die Notwendigkeit der Fixierung der Teile gegeneinander durch Kleben oder Anvulkanisierung. Ein Einschießen des Elastomerkörpers ist ebenfalls nicht erforderlich, so dass der Einsatz eines Einschussgleitmittels entfällt. Die Teile des erfindungsgemäßen Drehschwingungsdämpfers sind ausschließlich durch an den Spaltbegrenzungsflächen wirksame Friktionskräfte gegeneinander fixiert.

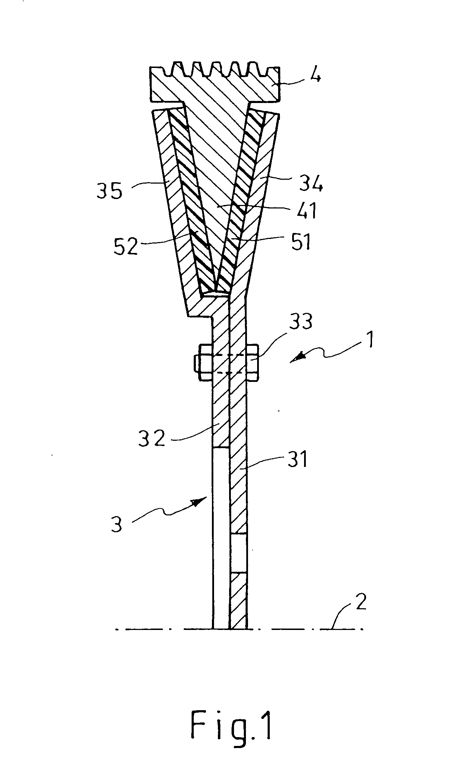

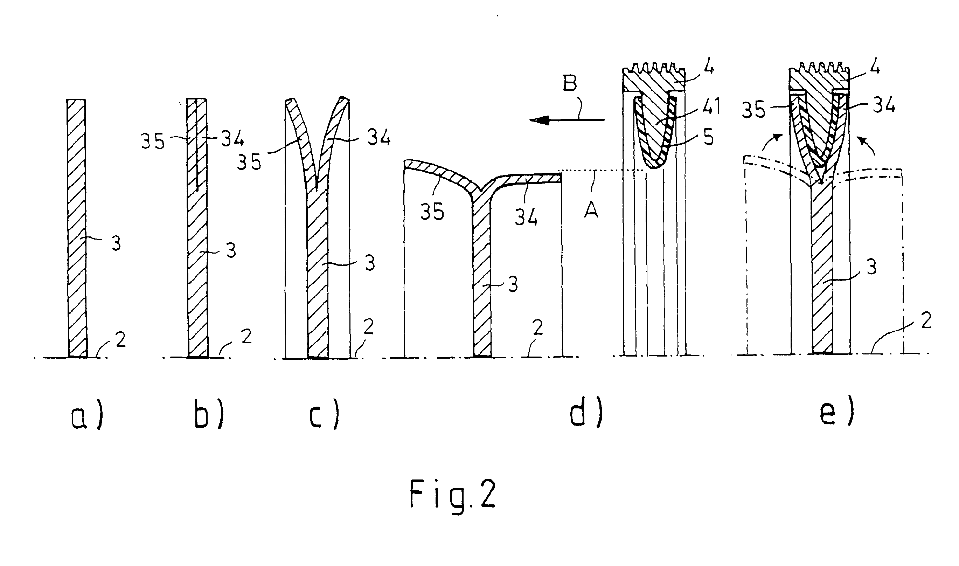

Die Erfindung wird nachfolgend anhand der beigefügten Figuren 1 und 2 ohne Beschränkung der Allgemeinheit beispielhaft erläutert:
Fig.1 zeigt prinzipiell eine Ausführung der Erfindung mit geteiltem Trägerteil in der Darstellung eines die Rotationsachse enthaltenden Querschnitts.
Fig. 2a) bis 2e) erläutern das besonders bevorzugte Herstellungsverfahren bei einteiliger Ausführung des Trägerteils.

Fig. 1 zeigt allgemein den Teilschnitt durch eine rotationssymmetrisch zur Antriebsachse 2 ausgebildete Drehschwingungsdämpfungsanordnung 1 mit einem zweiteilig ausgebildeten Trägerteil 3, wobei die beiden Teile 31 und 32 mittels mehrerer, koaxial angeordneter Schrauben 33 verschraubt sind. Die beiden Teile 31 und 33 weisen im achsenfernen Bereich V-förmig auseinander verlaufende Schenkel 34 und 35 auf. Das als Riemenscheibe ausgebildeten Trägheitsteil 4 weist einen V-förmig zur Achse hin gerichteten Keil 41 auf, der so ausgebildet ist, dass zwischen den Innenflächen der Schenkel 34 und 35 ein Spalt zur Aufnahme von scheibenförmigen Elastomerkörpern 51 und 52 gebildet wird. Die Breite des V-förmigen Spaltes bzw. die Dicke der Elastomerkörper 51 und 52 wird so bemessen, dass nach dem Zusammenfügen der Teile 31, 51, 4, 52 und 32 sich die Elastomerkörper unter einer vorgewählten Vorspannung befinden. Die Montage erfolgt vorzugsweise durch aufeinanderfolgendes Einbringen der Teile in eine Zentrierlehre.

Fig. 2a) zeigt den Teilschnitt durch die Rohform des Trägers 3 in Form einer Ronde, z.B. aus tiefziehfähigem Metall. Die Rohform des Trägers 3 wird radial zur Ausbildung der Schenkel 34 und 35 eingeschnitten (Fig. 2b)) und geweitet (Fig. 2c)). Die Aufweitung (Fig. 2d)) wird zumindest bezüglich eines Schenkels 34 so weit getrieben (angedeutet durch die strichlierte Linie A), dass der Trägheitsring mit dem (hier dargestellten) U-förmigen radialen Keil 41 und dem aufgezogenen (hier dargestellten) einteiligen Elastomerkörper 5 in Richtung des Pfeils B über den Schenkel 34 der Vorform des Trägerteils geschoben werden kann. Danach werden die Schenkel 34 und 35 mittels geeigneter Presswerkzeuge um den Elastomerkörper 5 unter Erzeugung einer vorwählbaren Vorspannung geschlossen.

## Patentansprüche

1. Drehschwingungsdämpferanordnung, ein rotationssymmetrisches Trägerteil, einen koaxialen Trägheitsring und mindestens einen im Spalt zwischen Trägerteil und Trägheitsring angeordneten Elastomerkörper aufweisend, **wobei** der Spalt in der axialen Querschnittsfläche U- bzw. V-förmig ausgebildet ist.

2. Drehschwingungsdämpferanordnung nach Anspruch 1, **wobei** die U- bzw. V-Form radial nach außen öffnet.

3. Drehschwingungsdämpferanordnung nach Anspruch 1 oder 2, **wobei** die Schenkel der U- bzw. V-Form mit der eingeschlossenen Radiuslinie jeweils einen Winkel von weniger als 30°, vorzugsweise weniger als 20° bilden.

4. Drehschwingungsdämpferanordnung nach einem der Ansprüche 1 bis 3 , **wobei** die Schenkel der U- bzw. V-Form bezüglich der eingeschlossenen Radiuslinie symmetrisch sind.

5. Drehschwingungsdämpferanordnung nach einem der Ansprüche 1 bis 4, **wobei** der Trägheitsring als Riemenscheibe ausgebildet ist.

6. Drehschwingungsdämpferanordnung nach einem der Ansprüche 1 bis 5, **wobei** das Trägerteil als Nabenring ausgebildet ist.

7. Drehschwingungsdämpferanordnung nach einem der Ansprüche 1 bis 6, **wobei** der Elastomerkörper im wesentlichen ausschließlich durch Friktionskräfte im Spalt fixiert ist.

8. Drehschwingungsdämpferanordnung nach einem der Ansprüche 1 bis 7, **wobei** das Trägerteil einteilig ausgebildet ist.

9. Drehschwingungsdämpferanordnung nach einem der Ansprüche 1 bis 7, **wobei** das Trägerteil zweiteilig mit einer Trennebene quer zur Achse ausgebildet ist.

10. Verfahren zur Herstellung einer Drehschwingungsdämpferanordnung, ein rotationssymmetrisches einteiliges Trägerteil, einen koaxialen Trägheitsring und mindestens einen im Spalt zwischen Trägerteil und Trägheitsring angeordneten Elastomerkörper aufweisend, wobei der Spalt in der axialen Querschnittsfläche U- bzw. V-förmig ausgebildet ist, **dadurch gekennzeichnet, dass** das Trägerteil aus tiefziehfähigen Material derart hergestellt wird, dass die im axialen Querschnitt U-bzw. V-förmige Spaltbegrenzung derart aufgeweitet ist, dass der größte Radiusabstand zumindest eines Schenkels kleiner ist, als der kleinste Radius des Trägheitsringes, der Trägheitsring und der bzw. die Elastomerkörper über den Schenkel geschoben bzw. geschossen werden und der bzw. die Schenkel anschließend durch Verformen in die gewünschte Form gebracht werden.

11. Verfahren nach Anspruch 10, **dadurch gekennzeichnet, dass** die Vorform des Trägerteils einteilig durch Tiefziehen und radiales Spalten zur Erzeugung der aufgeweiteten, im Querschnitt U- bzw. V-förmigen Spaltbegrenzung hergestellt wird.
